# EUROPEAN PATENT SPECIFICATION

(11) **EP 0 777 382 B1**
(45) Date of publication and mention of the grant of the patent: **06.02.2002**
(21) Application number: 96308538.6
(22) Date of filing: 26.11.1996
(51) Int. Cl.: H04N 5/50

(54) **Method and apparatus for detecting the broadcasting standard of a selected television channel**
Verfahren und Vorrichtung zum Detektieren des Übertragungstandards eines ausgwählten Fernsehkanals
Procédé et dispositif de détection du standard de télévision d'une chaîne de diffusion choisie

(30) Priority: 28.11.1995 JP 30860295
(43) Date of publication of application: 04.06.1997
(73) Proprietor: MATSUSHITA ELECTRIC INDUSTRIAL CO., LTD., Kadoma-shi, Osaka 571-0050 (JP)
(72) Inventor: Takeshima, Yuri, Takatsuki-shi, Osaka 569-11 (JP)
(74) Representative: Crawford, Andrew Birkby

(56) References cited:
- EP-A- 0 162 443
- SMAAL A: "SINGLE-CHIP MULTI-STANDARD COLOUR DECODER" ELECTRONIC COMPONENTS AND APPLICATIONS, vol. 7, no. 1, 1985, pages 24-36, XP002032224
- BRUNS ET AL.: "Analog multi-standard colour decoder ICs TDA4650 and TDA4660" ELECTRONIC COMPONENTS & APPLICATIONS, vol. 9, no. 4, 1989, page 194-207 XP000159333 Eindhoven, NL

## Description

### BACKGROUND OF THE INVENTION

The present invention relates to a television receiver for a multi-broadcast system in which circuits concerning a broadcast system are automatically selected according to the received television broadcast system.

In recent years, attention has been given to a channel selection apparatus of a television receiver and to an improvement of handling how easy a channel selection can be made, because of an increase of the number of channels, an increase of kinds of functions and higher functions.

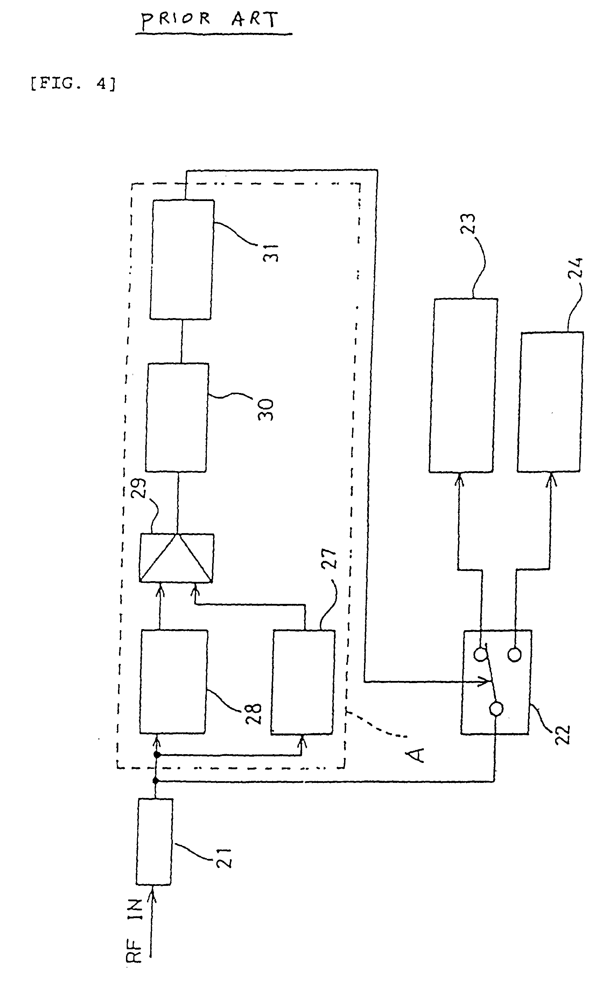

In Japanese Patent Laid-Open JP-A-5-252455, a broadcast system of the selected channel is discriminated and the circuits are automatically selected so as to suit the broadcast system. A block diagram of an automatic discrimination selection apparatus is shown in FIG. 4.

In FIG. 4, an rf input signal is detected at a tuner 21 and if a modulated sound signal is contained in the detected baseband signal (video signal) is judged at judge means A. The judge means A includes band pass filters 27 and 28, an amplifier 29, an ac/dc converter 30 and a comparator 31.

Which the broadcast system of the selected channel is: PAL (Phase Alternation by Line)/SECAM (Sequential Color And Memory) or MAC (Multiplexed Analog Component) is discriminated, a PAL/SECAM decoder 23 or a MAC decoder 24 which matches with a broadcast system of the selected channel is automatically selected by selection means 22 according to a discrimination result of the judge means A and a color signal corresponding to the broadcast system is demodulated.

However, automatic judge means like the above-mentioned has problems that it can not suitably discriminate the broadcast systems at a fringe area or can judge only a specific broadcast system and is an imperfect system having problems such as malfunction.

Therefore, in multi-broadcast system television receivers, their circuits are sometimes configured so that not only automatic selection of the circuits by automatic discrimination of the broadcast system is foreseen, but also a circuit suitable for a specific broadcast system can manually and forcibly be selected.

Thus, in the case having both automatic selection means and manual selection means, whenever the channel is changed from a received channel in which the demodulation circuits are manually set for a certain broadcast system to a channel for another broadcast system, it is necessary to manually reset from the circuit set forcibly to the circuit suitable for a broadcast system of the channel newly selected. In such a case, there are problems that many handlings are necessary for a channel selection, the handlings are complex and difficult. Especially, such problems occur when a plurality of broadcast systems can be received in an area such as a town near a border.

### SUMMARY OF THE INVENTION

The present invention aims to present a channel selection method and apparatus which can automatically select a desired broadcast system without requiring a television viewer to select the circuits by manual handling even under a circumstance that the viewer can manually (by force) select the circuits suitable for a specific broadcast system.

To attain the object, the present invention presents a channel selection method having the steps specified in appended claim 4.

Further, as an apparatus using the above-mentioned, method, the present invention presents a channel selection apparatus including the features specified appended claim 1.

According to the apparatus, the broadcast system of the received signal can be discriminated at every channel selection.

Embodiments of the present invention are claimed in claims 2 and 3.

Generally, in the prior art, the state in which the circuits concerning broadcast systems are manually selected so as to match with a broadcast system of the receiving signal is fixed and it is impossible to automatically select as long as the state is not reset.

However, it is possible to automatically select the concerning circuits so as to match with the broadcast system for the receiving signal of the selected channel at every channel selection by using the above-mentioned apparatus.

Thus, a handling of channel selection can be made simple.

### BRIEF DESCRIPTION OF THE DRAWINGS

FIG. 1 is a block diagram of a channel selection apparatus in accordance with a first exemplary embodiment of the present invention. (claim 1)
FIG. 2 is a block diagram of a channel selection apparatus including an automatic selection part of color demodulation circuit in accordance with a preferred embodiment of the present invention. (claim 2)
FIG. 3 is a flow chart of a channel selection method in accordance with the present invention. (claim 4)
FIG. 4 is a block diagram of an automatic discrimination selection apparatus for a multi-broadcast system in accordance with the prior art.

### DESCRIPTION OF THE PREFERRED EMBODIMENTS

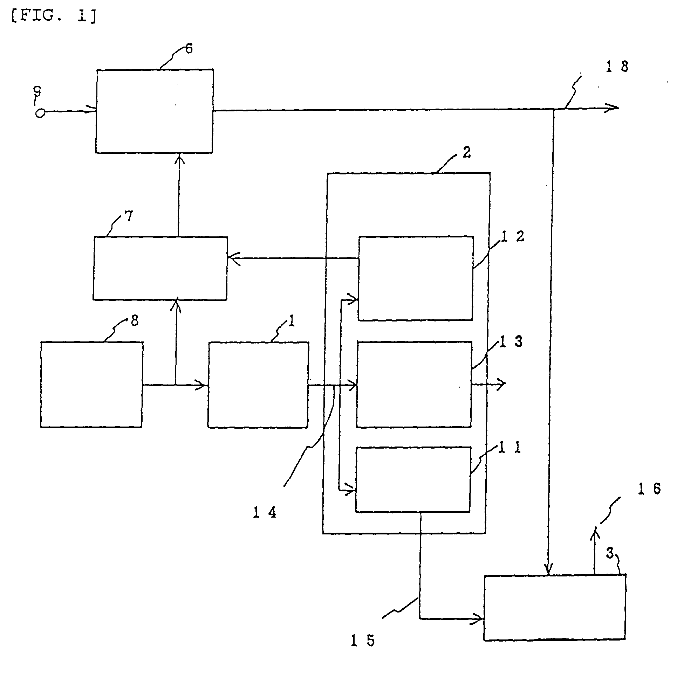

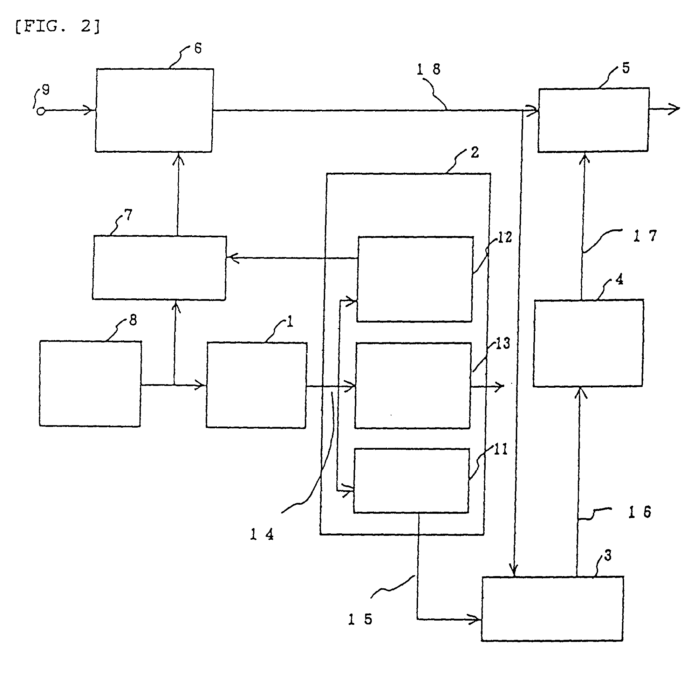

A channel selection apparatus in accordance with the present invention is explained below using FIGs. 1 and 2.

### (First exemplary embodiment)

A channel selection apparatus in accordance with a first exemplary embodiment of the present invention includes:
channel selection request means 1 detecting that a channel selection is instructed by channel selection instruction means 8 and for outputting a channel selection instruction signal 14;
a channel selection judge part 2 for detecting that a channel selection was instructed by the channel selection instruction signal 14 and having a function to output a broadcast system discrimination instruction signal 15; and
a broadcast system discrimination part 3 for discriminating a broadcast system from a detected video signal 18 and outputting a broadcast system discrimination signal 16;
and featuring to work a function to automatically discriminate broadcast systems at every channel selection.

The function is explained below.

FIG. 1 is a block diagram of a channel selection apparatus in accordance with the first exemplary embodiment of the present invention and includes peripheral blocks necessary for explanation.

In FIG. 1, a tuning/if amplification/detection means 6 selects a television signal of the channel corresponding to a tuning voltage supplied from tuning voltage generation means 7 out of one or more television signals inputted to an input terminal 9, amplifies the selected signal, detects and outputs as a video signal 18.

The receiving channel can be selected by generating a tuning voltage corresponding to the channel instructed by channel selection instruction means 8 at the tuning voltage generation means 7.

Channel selection instruction means 8 is composed of a remote controller or push buttons provided on a television receiver itself and the channel selection is made by a usual way such as a direct selection to directly select a channel number, an up/down selection to change channel numbers in order or the like using an instruction signal outputted from channel selection instruction means 8.

A channel selection request means 1 detects that a channel selection was instructed by channel selection instruction means 8 and outputs a channel selection instruction signal 14 to a channel selection judge part 2.

The channel selection judge part 2 is composed of a channel entry state setting part 12, an on-screen selection part 13 and a broadcast system discrimination instruction part 11.

The channel entry state setting part 12 selects a selection state of a tuning voltage to tuning voltage generation means 7 according to the channel selection instruction signal 14.

The on-screen selection part 13 processes to display a channel number and the like on a CRT screen according to the channel selection instruction signal 14.

The broadcast system discrimination instruction part 11 outputs a broadcast system discrimination instruction signal 15 to a broadcast system discrimination part 3 and works the broadcast system discrimination part 3 according to the channel selection instruction signal 14.

The broadcast system discrimination part 3 is worked by the broadcast system discrimination instruction signal 15, analyzes the video signal 18 outputted from the tuning/if amplification/ detection means 6, discriminates the broadcast systems and outputs a broadcast system discrimination signal 16. To discriminate the broadcast systems, it is possible to use a general technique such as if a modulated sound signal is superimposed on the detected video signal 18, what the carrier frequency of the modulated sound signal is or the like.

Thus, the broadcast system of the receiving signal can be automatically discriminated at every channel selection.

### (Preferred embodiment)

A channel selection apparatus in accordance with a preferred embodiment of the present invention has a function to select a color demodulation circuit including:
a color system selection part 4 outputting a color demodulation control signal 17 to a video processing part 5 according to a broadcast system discrimination signal 16 outputted from a broadcast system discrimination part 3; and
a video processing part 5 demodulating color according to the color demodulation control signal 17,
in addition to a function of automatic broadcast system discrimination described in the first exemplary embodiment,
and works to automatically select the color demodulation circuit at every channel selection.

The function is explained below. The same explanation as that described in the first exemplary embodiment is omitted.

FIG. 2 is a block diagram of a channel selection apparatus in accordance with the preferred embodiment of the present invention and includes peripheral blocks necessary for explanation.

In FIG. 2, a color system selection part 4 receives a broadcast system discrimination signal 16 outputted from a broadcast system discrimination part 3 at every channel selection and outputs a color demodulation control signal 17 instructing to select a color demodulation circuit suitable for the discriminated broadcast system to a video processing part 5.

The video processing part 5 selects a circuit by the color demodulation control signal 17 and demodulates color according to the color demodulation control signal 17.

### (Second preferred embodiment)

A channel selection apparatus in accordance with the second preferred embodiment of the present invention is quite same as that of the first preferred embodiment except that
in FIG. 2, channel selection request means 1 generates a channel selection instruction signal 14 only in the case in which the signal outputted from channel selection instruction means 8 is not for an up/down channel selection but for a direct channel selection by channel number.

A channel selection judge part 2, a broadcast system discrimination part 3 and a color system selection part 4 can be composed of a microprocessor in common in the above three exemplary embodiments.

A channel selection method for automatically selecting the circuits concerning broadcast system according to a television signal newly received will be described, for use when the circuits are manually selected for receiving and it is this channel selection method which is used in the above embodiments.

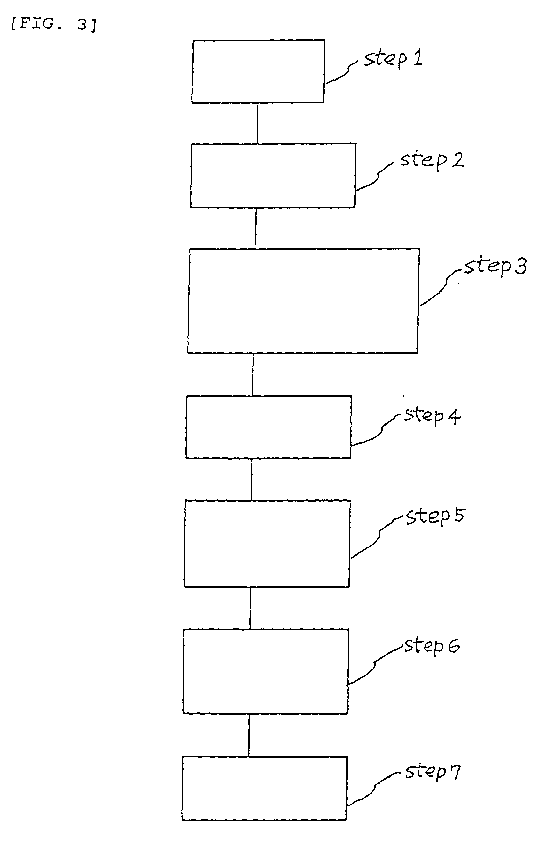

A flow chart showing a method to automatically select the circuits is shown in FIG. 3. Referring to FIG. 3,
steps 1 and 2: a channel selection instruction signal 14 is outputted from a channel selection request means 1 by an instruction from channel selection instruction means 8;
step 3: when the circuits concerning a broadcast system are manually selected, this is reset and automatic selection of the broadcast system is enabled;
step 4: a broadcast system discrimination instruction part 11 detects the channel selection instruction signal 14 and generates a broadcast system discrimination instruction signal 15;
step 5: a broadcast system discrimination part 3 analyzes a video signal 18 according to the broadcast system discrimination instruction signal 15, discriminates the broadcast system of the receiving signal and generates a broadcast system discrimination signal 16;
step 6: the circuits concerning the broadcast system are selected according to the broadcast system discrimination signal 16 at a color system selection part 4 and a video processing part 5; and
step 7: channel selection is completed.

Although only video processing was described, similar circuit selection can be made for a sound processing part and a deflection processing part, too.

Thus, according to the present invention, even when receiving a television signal and manually selecting the color demodulation circuit, the broadcast system is automatically selected at every channel selection, a color demodulation circuit suitable for the broadcast system is selected. Therefore, it is possible to automatically select a suitable color demodulation circuit and the channel selection procedure becomes simple without taking a complex procedure, except in the case in which the broadcast system is hard to be discriminated for the selected channel due to reception at a fringe area or the like.

The television viewer selects a color demodulation circuit for a specific broadcast system by a manual handling and can watch a correct picture, only in the case in which, for example, the selected channel is difficult to automatically discriminate the broadcast systems because of a fringe area reception.

Even in this case, the broadcast systems can be automatically discriminated and the color demodulation circuits can be automatically selected, when a different channel is newly selected,

The invention may be embodied in other specific form without departing from the scope thereof as indicated by the appended claims rather than being restricted by the foregoing description.

## Claims

1. A channel selection apparatus comprising:
channel selection request means for detecting that a channel selection is instructed by channel selection instruction means and outputting a channel selection instruction signal;
channel selection judge means for detecting that a channel selection is instructed by said channel selection instruction signal and outputting a broadcast system discrimination instruction signal, even when circuits concerning the broadcast system have been manually selected;
broadcast system discrimination means for discriminating the broadcast system from the inputted video signal when said broadcast system discrimination instruction signal is detected and outputting a broadcast system discrimination signal; whereby
an automatic discrimination function of the television broadcast system is worked at every channel selection.

2. A channel selection apparatus as recited in claim 1, further comprising:
color system selection means for outputting a color demodulation control signal according to a broadcast system discrimination signal outputted from a broadcast system discrimination means; and
video processing means for color demodulating according to said color demodulation control signal; and wherein
a television broadcast system is automatically discriminated and a color demodulation suitable for the broadcast system is made at every channel selection.

3. A channel selection apparatus as recited in claim 2, wherein:
only when a channel is selected by directly outputting a channel number from said channel selection instruction means, said channel selection request means outputs a channel selection instruction signal and works a function of automatic discrimination of the television broadcast system and a function of suitable color demodulation for the the television broadcast system.

4. A channel selection method comprising, in the case in which the circuits concerning the broadcast systems of a television receiver for a multi-broadcast system are manually selected and are working:
a step to generate a channel selection instruction signal which works circuits concerning a channel selection by channel selection instruction means and channel selection request means;
a step to reset the manual selection and change to an automatic selection, even when the circuits concerning broadcast systems have been manually selected;
a step to generate a broadcast system discrimination instruction signal which works broadcast system discrimination means on detecting said channel selection instruction signal;
a step to generate a broadcast system discrimination signal by detecting said broadcast system discrimination instruction signal and by analyzing a video signal; and
a step to generate a signal to select circuits concerning the broadcast system on detecting said broadcast system discrimination signal.

## Patentansprüche

1. Kanalwählvorrichtung, die umfasst:
eine Kanalwähl-Anforderungseinrichtung, die erfasst, dass eine Kanalwahl von einer Kanalwähl-Anweisungseinrichtung angewiesen wird, und ein Kanalwähl-Anweisungssignal ausgibt;
eine Kanalwähl-Feststelleinrichtung, die erfasst, dass eine Kanalwahl von dem Kanalwähl-Anweisungssignal angewiesen wird, und ein Übertragungssystem-Erkennungs-Anweisungssignal selbst dann ausgibt, wenn das Übertragungssystem betreffende Schaltungen manuell ausgewählt worden sind;
eine Übertragungssystem-Erkennungseinrichtung, die das Übertragungssystem aus dem eingegebenen Videosignal erkennt, wenn das Übertragungssystem-Erkennungs-Anweisungssignal erfasst wird, und ein Übertragungssystem-Erkennungssignal ausgibt; so dass
eine automatische Erkennungsfunktion des Fernsehübertragungssystems bei jeder Kanalwahl ausgeführt wird.

2. Kanalwählvorrichtung nach Anspruch 1, die des Weiteren umfasst:
ein Farbsystem-Auswähleinrichtung, die ein Farbdemoduiations-Steuersignal entsprechend einem Übertragungssystem-Erkennungssignal ausgibt, das von einer Übertragungssystem-Erkennungseinrichtung ausgegeben wird; und
eine Videoverarbeitungseinrichtung für die Farbdemodulation entsprechend dem Farbdemodulations-Steuersignal; und wobei
ein Fernsehübertragungssystem automatisch erkannt wird, und eine Farbdemodulation, die für das Übertragungssystem geeignet ist, bei jeder Kanalwahl ausgeführt wird.

3. Kanalwählvorrichtung nach Anspruch 2, wobei:
nur, wenn ein Kanal ausgewählt wird, indem direkt eine Kanalnummer von der Kanalwähl-Anweisungseinrichtung ausgegeben wird, die Kanalwähl-Anforderungseinrichtung ein Kanalwähl-Anweisungssignal ausgibt und eine Funktion des automatischen Erkennens des Femsehübertragungssystems sowie eine Funktion der geeigneten Farbdemodulation für das Fernsehübertragungssystem ausführt.

4. Kanalwählverfahren, das für den Fall, dass die die Übertragungssysteme eines Fernsehempfängers für ein Mehrfachübertragungssystem betreffenden Schaltungen manuell ausgewählt werden und arbeiten, umfasst:
einen Schritt zum Erzeugen eines Kanalwähl-Anweisungssignals, das auf eine Kanalwahl betreffende Schaltungen mittels einer Kanalwähl-Anweisungseinrichtung und einer Kanalwähl-Anforderungseinrichtung einwirkt;
einen Schritt zum Zurücksetzen der manuellen Wahl und zum Verändern einer automatischen Wahl selbst dann, wenn die die Übertragungssysteme betreffenden Schaltungen manuell ausgewählt worden sind;
einen Schritt zum Erzeugen eines Übertragungssystem-Erkennungs-Anweisungssignals, das beim Erfassen des Kanalwähl-Anweisungssignals auf eine Übertagungssystem-Erkennungseinrichtung einwirkt;
einen Schritt zum Erzeugen eines Übertragungssystem-Erkennungssignals durch Erfassen des Übertragungssystem-Erkennungs-Anweisungssignals und durch Analysieren eines Videosignals; und
ein Schritt zum Erzeugen eines Signals zum Auswählen von das Übertragungssystem betreffenden Schaltungen beim Erfassen des Übertragungssystem-Erkennungssignals.

## Revendications

1. Appareil de sélection de chaînes comprenant :
des moyens de demande de sélection de chaînes permettant de détecter qu'une sélection de chaînes est commandée par des moyens de commande de sélection de chaînes et de générer un signal de commande de sélection de chaînes ;
des moyens de contrôle de sélection de chaînes permettant de détecter qu'une sélection de chaînes est commandée par ledit signal de commande de sélection de chaînes et de générer un signal de commande de discrimination de système de diffusion, même lorsque les circuits correspondant au système de diffusion ont été sélectionnés manuellement ;
des moyens de discrimination du système de diffusion permettant de discriminer le système de diffusion à partir du signal vidéo entré lorsque ledit signal de commande de discrimination du système de diffusion est détecté et de générer un signal de discrimination du système de diffusion ; moyennant quoi
une fonction de discrimination automatique du système de télédiffusion est utilisée à chaque sélection de chaînes.

2. Appareil de sélection de chaînes selon la revendication 1, comprenant en outre :
des moyens de sélection des systèmes couleur permettant de générer un signal de commande de démodulation couleur en fonction d'un signal de discrimination du système de diffusion généré par un moyen de discrimination du système de diffusion, et
des moyens de traitement vidéo pour une démodulation couleur en fonction dudit signal de commande de démodulation couleur, dans lequel
un système de télédiffusion est automatiquement discriminé et une démodulation couleur adéquate pour le système de diffusion est établie à chaque sélection de chaînes.

3. Appareil de sélection de chaînes selon la revendication 2, dans lequel :
lorsqu'une chaîne est sélectionnée en générant directement un numéro de chaîne à partir desdits moyens de commande de sélection de chaînes, lesdits moyens de demande de sélection de chaînes génèrent un signal de commande de sélection de chaînes et utilisent une fonction de discrimination automatique du système de télédiffusion et une fonction de démodulation couleur adéquate pour le système de télédiffusion.

4. Procédé de sélection de chaînes comprenant :
lorsque les circuits correspondant aux systèmes de diffusion d'un récepteur de télévision pour un système multidiffusion sont sélectionnés manuellement et fonctionnent :
une étape consistant à générer un signal de commande de sélection de chaînes utilisant les circuits correspondant à une sélection de chaînes par les moyens de commande de sélection de chaînes et les moyens de demande de sélection de chaînes ;
une étape consistant à réarmer la sélection manuelle et le passage en sélection automatique, même lorsque les circuits correspondant aux systèmes de diffusion ont été sélectionnés manuellement ;
une étape consistant à générer un signal de commande de discrimination du système de diffusion utilisant les moyens de discrimination du système de diffusion lors de la détection dudit signal de commande de sélection de chaînes ;
une étape consistant à générer un signal de discrimination du système de diffusion, en détectant ledit signal de commande de discrimination du système de diffusion et en analysant un signal vidéo et
une étape consistant à générer un signal pour sélectionner les circuits correspondant au système de diffusion lors de la détection dudit signal de discrimination du système de diffusion.
